# EUROPÄISCHE PATENTSCHRIFT

(11) **EP 0 505 932 B1**
(45) Veröffentlichungstag und Bekanntmachung des Hinweises auf die Patenterteilung: **11.12.1996**
(21) Anmeldenummer: 92104839.3
(22) Anmeldetag: 20.03.1992
(51) Int. Cl.: G06K 7/06

(54) **Halterung für einschiebbare Chip-Karte**
Holder for insertable chip card
Support pour carte à puce insérable

(30) Priorität: 28.03.1991 DE 4110767
(43) Veröffentlichungstag der Anmeldung: 30.09.1992
(73) Patentinhaber: Hagenuk Telecom GmbH, 24118 Kiel (DE)
(72) Erfinder: Petersen, Henning, DK-9240 Nibe (DK)
(74) Vertreter: Hansmann, Dierk, Dipl.-Ing.

(56) Entgegenhaltungen:
- EP-A- 0 234 654
- EP-A- 0 276 403
- DE-U- 8 905 190

## Beschreibung

Die Erfindung betrifft eine Halterung für eine insbesondere manuell einschiebbare Chip-Karte, insbesondere für eine Berechtigungskarte für die Benutzung eines mobilen Telefones.

Derartige Chip-Karten sind für die Benutzung des mobilen Telefones erforderlich, wenn aus Sicherheitsgründen die Benutzungsberechtigung unabhängig von dem einzelnen Gerät festgelegt werden soll.

Zum Nachweis der Berechtigung werden vorzugsweise Chip-Karten verwendet, bei denen über geeignete Kontakte von dem mobilen Telefon Informationen aus der Karte übernommen oder in diese abgespeichert werden können. Hierzu muß die Karte mit ihren Kontakten relativ zu den Kontakten des mobilen Telefones richtig gehaltert werden.

Als Halterung wurden z. B. in EP 0 276 403 A2 Einrichtungen vorgeschlagen, bei denen die Karte entweder in einer doppelwandigen hohlen Klappe untergebracht wird, die außen am mobilen Telefon angebracht ist und nach Einführen der Karte in eine im mobilen Telefon vorgesehene wannenartige Ausnehmung oder Mulde eingeklappt werden. Eine andere Ausführung der genannten Schrift sieht eine außen am mobilen Telefon angebrachte Mulde vor, in die die Karte eingelegt und mit einem klappbaren Deckel abgedeckt wird. Dabei weist die Ausführung mit doppelwandiger, hohler Klappe Mittel zur Führung der Chip-Karte an einem Kartenende auf, im Boden der außen am mobilen Telefon angebrachten Mulde sind an die Chip-Karte andrückbare Kontaktelemente angeordnet, und die Schmalseiten der Chip-Karte sind im wesentlichen vollständig von der Halterung verdeckt. Die Klappe wird mit federnd lösbaren Rasteinrichtungen verschlossen gehalten.
In beiden Fällen ist davon auszugehen, daß eine Mulde angeordnet ist, die eine der Kartendicke entsprechende Tiefe und eine der Form der Chipkarte paßgenau entsprechende Formgebung aufweist.

Beide Ausführungen erfordern zur verdeckten Halterung der Chip-Karte eine Abdeckklappe mit entsprechendem Scharnier und Rasteinrichtungen, die außen am Gerät angebracht sind.

Diese Gestaltung kann als fertigungstechnisch ungünstig angesehen werden. Darüber hinaus können die beweglichen Teile, wie Klappe und Rasteinrichtungen, bei mechanischer Belastung relativ leicht beschädigt werden. Die vorgesehenen Einrichtungen entsprechen ferner nicht den gestiegenen Anforderungen eines modernen Designs. Aufgabe der Erfindung war es daher, eine Halterung für eine einschiebbare Chip-Karte zu schaffen, die eine sichere Lagerung der Karte ohne fertigungstechnisch aufwendige Abdeck- und Rasteinrichtungen ermöglicht, ohne daß die Karte oder die Halterung von außen sichtbar ist.

Die erfindungsgemäße Lösung dieser Aufgabe sieht vor, die Chip-Karte in einer Mulde unterzubringen, die mit ihrer offenen Seite vollständig im Inneren des Gerätes, insbesondere des mobilen Telefones weisend angeordnet ist. Die Mulde weist eine der Kartendicke entsprechende Tiefe auf und die Umrandung der Mulde entspricht paßgenau der Formgebung der Karte . Die Zugänglichkeit der Karte, das heißt das Einschieben und Entnehmen der Karte wird insbesondere dadurch gewährleistet, daß die Kartenhalterung im Bereich des Batteriefachs angeordnet ist, so daß nach Entnahme der Batterien bzw. der Akkus die Karte durch das leere Batteriefach entnommen bzw. eingeschoben werden kann. Ferner für Kontaktierungszwecke dadurch, daß eine der Kartenseiten den Kontakten bzw. Andruckmitteln aussetzbar ist. Diese erfinderische Lösung ist Gegenstand des kennzeichnenden Teils des Anspruchs 1 bzw. des Verwendungsanspruchs 12. Die Ansprüche 2 bis 11 bieten zweckmäßige Weiterbildungen der erfinderischen Lösung nach Anspruch 1.

Ausführungsbeispiele der Erfindung werden anhand der Figuren 1 bis 3 erläutert.

Es zeigen in schematischer Darstellung:
- Figur 1: eine perspektivische Ansicht eines mobilen Telefons mit herausgenommenem Batterieeinschub, wobei die vordere schmale Seitenfläche des Telefons herausgeschnitten dargestellt ist;
- Figur 2: einen Längsschnitt durch ein mobiles Telefon;
- Figur 3: eine perspektivische Ansicht eines mobilen Telefons mit herausgenommenem Batterieeinschub, wobei die vordere schmale Seitenfläche des Telefons herausgeschnitten dargestellt ist.

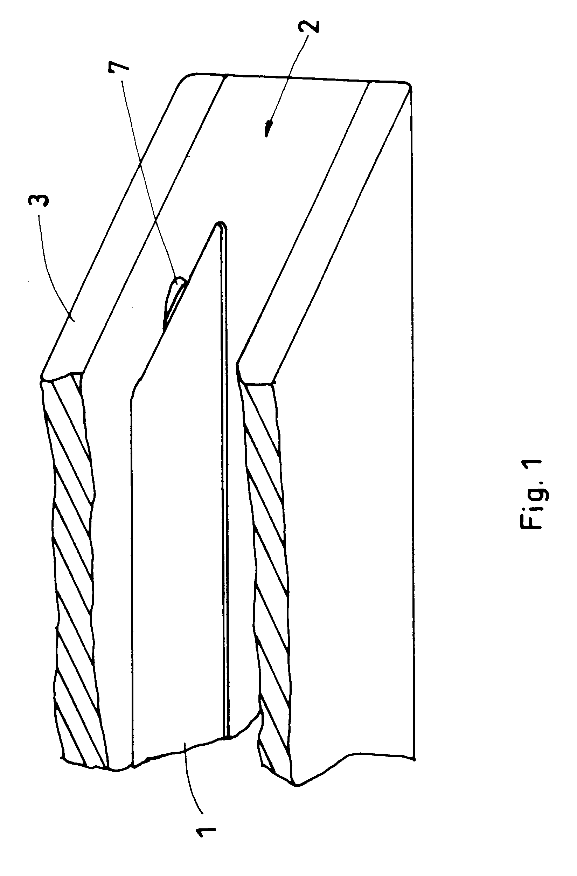

In Figur 1 ist eine Mulde 1 dargestellt, die im Inneren 2 eines Gerätes 3 angeordnet ist. Die Mulde 1 dient der Aufnahme der Chip-Karte in das Gerät 3. Das Innere 2 ist insbesondere zum Einlegen der Chip-Karte zugänglich, nachdem hier die Stromversorgungseinheit für das Gerät 3 entnommen worden ist. Das Innere 2 ist damit im wesentlichen das Batteriefach des Gerätes 3 bzw. des mobilen Telefons. Die Mulde 1 ist selbst und insbesondere mit ihrer offenen Seite vollständig in das Innere 2 des Gerätes 3 eingebettet. Dabei weist die offene Seite der Mulde 1 in den durch das Herausnehmen der Stromversorgungseinheit frei gewordenen Innenraum 2. Die Mulde 1 weist eine Tiefe auf, die im wesentlichen der Dicke der Chip-Karte entspricht. Die Kontur der Mulde entlang der die Tiefe der Mulde bildenden Seitenwände entspricht paßgenau der Form der Chip-Karte. Die Form der Chip-Karte wird im allgemeinen durch genormte Standards festgelegt. Nach Einführen der Chip-Karte in die Mulde 1 ist die Karte entlang der schmalen Seitenflächen im wesentlichen vollständig in die Mulde eingebettet. Eine Ausnehmung 7 in einer der Muldenwände, die die Tiefe der Mulde bestimmen und die der Einführungsrichtung entgegengesetzt liegend ist, ermöglicht das Herausnehmen der Chip-Karte. Hierzu wird ein flacher Gegenstand in die Ausnehmung 7 eingeführt, und die Chip-Karte aus der Mulde herausgebogen. Durch eine nicht dargestellte Federeinrichtung wird die Chip-Karte dann in Richtung der außen liegenden Öffnung des Batteriefachs (entgegengesetzte Einführungsrichtung der Chip-Karte) herausgeschoben.

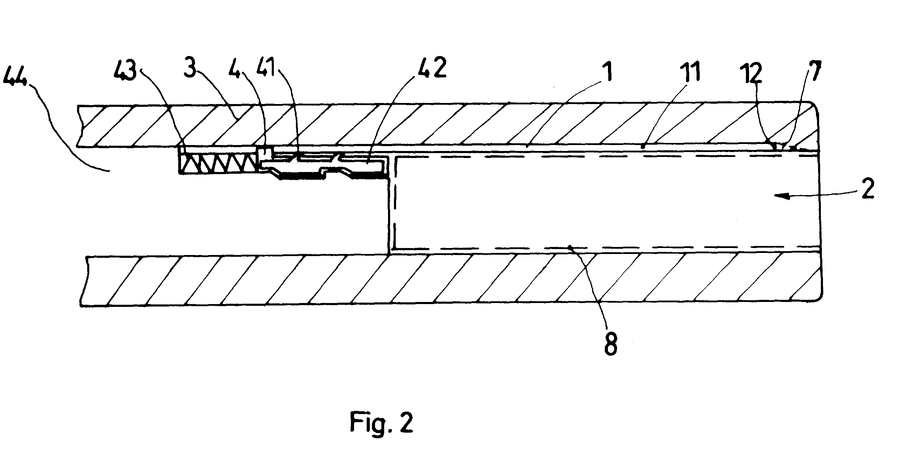

Der in Figur 2 dargestellte Längsschnitt durch ein mobiles Telefon beschreibt eine Mulde 1 im Inneren eines Gerätes 3, deren offene Seite dem Inneren 2 des Gerätes 3 zugewandt ist. An dem in Einführungsrichtung der Karte liegenden Ende - dies entspricht etwa der Richtung des Pfeiles bei der Ziffer 2 - sind Mittel 4 zur Führung der Chip-Karte, insbesondere auch zum Herausschieben der Chip-Karte, angeordnet. Von den die Tiefe der Mulde bildenden Wände, soweit sie der Form der Chip-Karte entsprechen müssen, sind die zur Einführungsrichtung parallel liegenden Wände 11 (in der Schnittdarstellung ist nur eine Wand zu sehen) und die zur Einführungsrichtung senkrecht liegende Wand 12 feststehend ausgebildet. An dem in Einführungsrichtung liegenden Ende der Mulde 1 sind die andrückbaren Kontaktelemente 41 an der offenen Seite der Mulde angeordnet. Die andrückbaren Kontaktelemente 41 sind beim Einführen der Karte in Einführungsrichtung bewegbar. Mit dem Einschieben der Karte werden außerdem die andrückbaren Kontaktelemente 41 etwa durch Gleiten auf einer schiefen Ebene senkrecht zur Einführungsrichtung auf den Boden der Mulde 1 hin zubewegt. Dadurch erfolgt die Kontaktierung zwischen den andrückbaren Kontakten 41 und den Kontakten der Chip-Karte (nicht dargestellt), ohne daß es zu Schleifbewegungen kommt. Die andrückbaren Kontakte 41 sind auf einem Kontaktträger 42 angeordnet, und die mittelste Führung der Karte sind mit einer Feder 43 verbunden, so daß die Karte nach Entfernung der Batterien 8 durch Heraushebeln über die Ausnehmung 7 über den Muldenrand 12 geschoben wird. Die Feder 43 ist gegen ein Bestandteil 44 des mobilen Telefones gelagert.

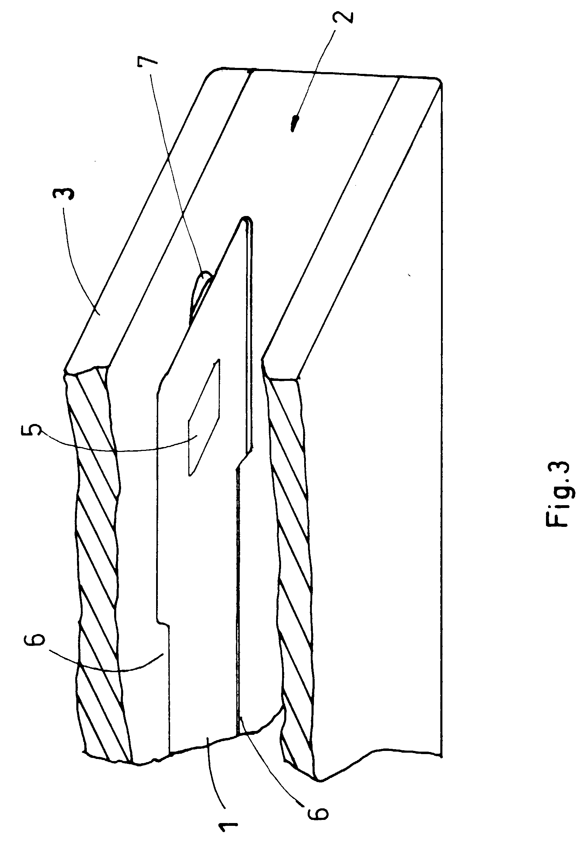

In Figur 3 ist eine weitere Ausführung der erfindungsgemäßen Lösung dargestellt. In der Mulde 1, angeordnet im Inneren 2 des Gerätes 3, sind im Boden der Mulde andrückbare Kontaktelemente 5 angeordnet. Als Mittel zur Führung der Karte sind hier zwei schienenartige Gebilde 6 vorgesehen, die teilweise die Mulde 1 überdachen. Durch die Form der Schienen 6 im Bereich des Zwischenraumes zwischen dem Boden der Mulde 1 und der kartenseitigen Wandung der Schienen 6 sowie die Länge der Schienen 6 relativ zur Länge der Karte in Einschubrichtung kann die erforderliche Andruckkraft zwischen den Kontakten 5 und den Kontakten der Chip-Karte (nicht dargestellt) eingestellt werden. Zum Herausnehmen der Karte wird diese über die Ausnehmung 7 über den Muldenrand herausgehoben und durch nicht dargestellte Federelemente herausgedrückt bzw. einfach herausgezogen, wenn das Heraushebeln über die Ausnehmung 7 einfacherweise mit einem Zeigefindernagel erfolgt.

## Patentansprüche

1. Halterung für insbesondere manuell einschiebbare Chip-Karte, die auf einer Seite Kontakte aufweist mit Mitteln zur Führung der Chip-Karte an einem Kartenende, mit an die Chip-Karte andrückbaren Kontaktelementen und eine die Chip-Karte aufnehmenden Mulde (1), die eine der Kartendicke entsprechende Tiefe und eine der Form der Chipkarte paßgenau entsprechende Formgebung aufweist und in der alle Schmalseiten der Karte im wesentlichen vollständig aufnehmbar sind, dadurch gekennzeichnet, daß die Mulde(1) mit ihrer offenen Seite vollständig in das Innere (2) eines die Chip-Karte benötigenden Gerätes (3) weisend, angeordnet ist.

2. Halterung nach Anspruch 1, dadurch gekennzeichnet, daß die Mittel (4) zur Führung der Chip-Karte an dem in Einführungsrichtung der Chip-Karte liegenden Ende der Mulde (1) angeordnet sind.

3. Halterung nach Anspruch 1, dadurch gekennzeichnet, daß die die Muldentiefe bildenden Wände (11, 12), die jeweils parallel (11) sowie senkrecht und' entgegengesetzt (12) zur Einführungsrichtung verlaufen, feststehend sind.

4. Halterung nach einem der Ansprüche 1 bis 3, dadurch gekennzeichnet, daß die andrückbaren Kontaktelemente (41) im Bereich des in Einführungsrichtung liegenden Endes der Mulde angeordnet sind.

5. Halterung nach Anspruch 4, dadurch gekennzeichnet, daß die andrückbaren Kontaktelemente (41) an der offenen Seite der Mulde angeordnet sind.

6. Halterung nach Anspruch 5, dadurch gekennzeichnet, daß die andrückbaren Kontaktelemente (41) in Einführungsrichtung der Chip-Karte bewegbar sind.

7. Halterung nach Anspruch 6, dadurch gekennzeichnet, daß die andrückbaren Kontaktelemente (41) senkrecht zur Chip-Kartenebene mit der Einführung der Chip-Karte bewegbar sind.

8. Halterung nach Anspruch 7, dadurch gekennzeichnet, daß die andrückbaren Kontaktelemente (41) an den Mitteln (4) zur Führung der Chip-Karte angeordnet sind.

9. Halterung nach einem oder mehreren der Ansprüche 1 bis 4, dadurch gekennzeichnet, daß die andrückbaren Kontaktelemente (5) im Boden der Mulde angeordnet sind.

10. Halterung nach Anspruch 9, dadurch gekennzeichnet, daß die Mittel zur Führung der Karte als teilweise die Mulde überdachende, die Chip-Karte in die Mulde andrückende Schienen (6) ausgebildet sind.

11. Halterung nach einem oder mehreren der Ansprüche 1 bis 10, dadurch gekennzeichnet, daß die Mulde an ihrem der Einführungsrichtung der Chip-Karte entgegengesetzten Ende eine das Einschieben eines flachen Gegenstandes zwischen Mulde und Chip-Karte gestattende Ausnehmung (7), in der die Tiefe der Mulde bestimmenden Wandung aufweist.

12. Verwendung der Halterung für einschiebbare Chip-Karte in einem mobilen Telefon, dadurch gekennzeichnet, daß die Mulde (1) im Inneren (2) eines Telefons (3) im Bereich des Batteriefachs angeordnet und durch den Batterieeinschub vollständig verdeckt und gesichert wird.

## Claims

1. Holder for an insertable chip card, in particular a manually insertable chip card, which holder comprises on one side contacts with means for guiding the chip card at one card end, with contact elements which can be pressed against the chip card, and a tray (1) which accommodates the chip card, is of a depth which corresponds to the card thickness, is shaped to correspond to the shape of the chip card with a precise fit and can accommodate, essentially completely, all the narrow sides of the card, characterised in that the tray (1) is disposed with its open side directed completely into the interior (2) of a device (3) requiring the chip card.

2. Holder according to claim 1, characterised in that the means (4) for guiding the chip card are disposed at the end of the tray (1) lying in the direction in which the chip card is inserted.

3. Holder according to claim 1, characterised in that the walls (11, 12) forming the tray depth which extend parallel (11) and perpendicularly and opposite (12) to the direction of insertion are stationary.

4. Holder according to one of claims 1 to 3, characterised in that the contact elements (41) which can be pressed against the chip card are disposed in the region of the end of the tray which lies in the direction of insertion.

5. Holder according to claim 4, characterised in that the contact elements (41) which can be pressed against the chip card are disposed at the open side of the tray.

6. Holder according to claim 5, characterised in that the contact elements (41) which can be pressed against the chip card can move in the direction in which the chip card is inserted.

7. Holder according to claim 6, characterised in that the contact elements (41) which can be pressed against the chip card can move perpendicularly to the chip card plane when the chip card is inserted.

8. Holder according to claim 7, characterised in that the contact elements (41) which can be pressed against the chip card are disposed on the means (4) for guiding the chip card.

9. Holder according to one or more of claims 1 to 4, characterised in that the contact elements (5) which can be pressed against the chip card are disposed in the bottom of the tray.

10. Holder according to claim 9, characterised in that the means for guiding the card are formed as rails (6) which partly extend like a roof over the tray and press the chip card into the tray.

11. Holder according to one or more of claims 1 to 10, characterised in that, at its end which is opposite the direction in which the chip card is inserted, the tray comprises a recess (7), in the wall determining the depth of the tray, which enables a flat object to be inserted between the tray and the chip card.

12. Use of the holder for an insertable chip card in a mobile telephone, characterised in that the tray (1) is disposed in the interior (2) of a telephone (3) in the region of the battery compartment and is completely covered and secured by the push-in battery unit.

## Revendications

1. Support pour carte à puce insérable, en particulier à la main, qui, à un côté, comporte des contacts, avec des moyens destinés au guidage de la carte à puce à l'une des extrémités de la carte et avec des éléments de contact pouvant être pressés sur la carte à puce, ainsi qu'une cuvette (1) destinée à recevoir et à contenir la carte à puce, cuvette qui présente une profondeur qui correspond à l'épaisseur de la carte et une forme qui correspond à la forme de la carte à puce de façon que cette dernière s'y adapte exactement, cuvette dans laquelle, en outre, tous les côtés étroits de la carte puissent être contenus essentiellement de façon complète, le support étant caractérisé en ce que la cuvette (1) a été prévue de façon à être dirigée parfaitement par son côté ouvert vers la partie interne (2) d'un appareil (3) qui nécessite la carte à puce.

2. Support suivant la revendication 1, caractérisé en ce que les moyens (4) prévus pour le guidage de la carte à puce ont été placés à l'extrémité de la cuvette (1) qui se trouve dans le sens de l'introduction de la carte à puce.

3. Support suivant la revendication 1, caractérisé en ce que les parois (11, 12) délimitant la profondeur de la cuvette, parois dont l'une (11) a une allure parallèle au sens de l'introduction et dont l'autre (12) est perpendiculaire au sens de l'introduction et est opposée à celui-ci, sont fixes.

4. Support suivant l'une quelconque des revendications 1 à 3 caractérisé en ce que les éléments de contact (41) qui peuvent être pressés ont été prévus dans la zone de l'extrémité de la cuvette qui se trouve dans le sens de l'introduction.

5. Support suivant la revendication 4, caractérisé en ce que les éléments de contact (41) qui peuvent être pressés ont été prévus au côté ouvert de la cuvette.

6. Support suivant la revendication 5, caractérisé en ce que les éléments de contact (41) qui peuvent être pressés peuvent être déplacés dans le sens de l'introduction de la carte à puce.

7. Support suivant la revendication 6, caractérisé en ce que les éléments de contact (41) qui peuvent être pressés peuvent être déplacés perpendiculairement au plan de la carte à puce lors de l'introduction de cette carte à puce.

8. Support suivant la revendication 7, caractérisé en ce que les éléments de contact (41) qui peuvent être pressés ont été prévus sur les moyens (4) destinés au guidage de la carte à puce.

9. Supports suivant l'une ou plusieurs des revendications 1 à 4, caractérisé en ce que les éléments de contact (5) qui peuvent être pressés ont été prévus dans le fond de la cuvette.

10. Support suivant la revendication 9, caractérisé en ce que les moyens destinés au guidage de la carte ont été prévus sous la forme de rails (6) qui couvrent en partie la cuvette et qui pressent la carte à puce dans la cuvette.

11. Support suivant l'une quelconque des revendications 1 à 10, caractérisé en ce que la cuvette présente, à son extrémité opposée au sens de l'introduction de la carte à puce, un évidement (7) qui permet l'insertion d'un objet plat entre la cuvette et la carte à puce, évidement (7) qui a été formé dans la cloison qui détermine la profondeur de la cuvette.

12. Utilisation du support pour carte à puce insérable dans un appareil téléphonique mobile, caractérisée en ce que la cuvette (1) est placée dans la partie interne (2) d'un appareil téléphonique (3) dans la zone de compartiment réservé à la batterie et est couverte complètement et protégée de façon sûre par l'introduction de la batterie.
